# FASCICULE DE BREVET EUROPEEN

(11) **EP 1 828 656 B1**
(45) Date de publication et mention de la délivrance du brevet: **01.04.2009**
(21) Numéro de dépôt: 05825961.5
(22) Date de dépôt: 13.12.2005
(51) Int. Cl.: F16L 9/18, F16L 59/065, F16L 59/14, F16L 39/00

(54) **ELEMENT DE CONDUITES COAXIALES SOUS-MARINES ALLEGE ET RENFORCE**
LEICHTES VERSTÄRKTES ELEMENT FÜR KOAXIALE UNTERWASSERROHRE
LIGHT REINFORCED ELEMENT OF COAXIAL UNDERWATER PIPES

(30) Priorité: 17.12.2004 FR 0413489
(43) Date de publication de la demande: 05.09.2007
(73) Titulaire: SAIPEM S.A., 78180 Montigny-le-Bretonneux (FR)
(72) Inventeur: PIONETTI, François-Régis, F-50450 La Baleine (FR)
(74) Mandataire: Domange, Maxime
(86) Numéro de dépôt international: PCT/FR2005/003121
(87) Numéro de publication internationale: WO 2006/067303

(56) Documents cités:
- EP-A- 0 635 667
- GB-A- 2 161 565
- GB-A- 2 396 196
- US-A- 4 560 188

## Description

La présente invention concerne le domaine des conduites à double paroi coaxiales intégrant un complexe d'isolation, notamment des conduites sous-marines véhiculant des fluides chauds ou froids.

La présente invention concerne en particulier les conduites sous-marines à isolation renforcée, installées sur les champs pétroliers par grandes profondeurs, ainsi que les conduites en suspension entre le fond de la mer et un navire de surface ancré sur ledit champ pétrolier.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins, lesquels s'étendent sur plusieurs dizaines de kilomètres. De tels champs pétroliers sont développés par des profondeurs d'eau de plus en plus importantes laquelle peut largement dépasser 3000m.

De nombreux systèmes ont été développés pour atteindre un haut niveau de performance thermique et des versions spécifiques ont été développées pour répondre de manière plus adaptée aux grands fonds, c'est à dire pour résister à la pression du fond de la mer. Les technologies les plus performantes qui ont été développées pour atteindre cet objectif sont les technologies dites "Pipe In Pipe" ou PIP, c'est à dire "conduite dans une conduite", dans laquelle une conduite interne véhicule le fluide et une conduite externe coaxiale à la précédente est en contact avec le milieu ambiant, c'est à dire l'eau. L'espace annulaire entre les deux conduites peut être rempli d'un matériau isolant ou encore être vidé de tout gaz.

Dans les très grandes profondeurs, c'est-à-dire par 2000 ou 3000m, voire plus, le poids des conduites croit très rapidement, car l'enveloppe externe doit résister à la pression et présente de ce fait une épaisseur très importante. Ainsi, la pose de telles conduites nécessite des équipements très importants, car dans la configuration en chaînette de la conduite en cours de pose, plus la profondeur augmente, non seulement la longueur de ladite chaînette augmente, mais aussi son poids unitaire, car l'enveloppe externe doit résister à une pression d'implosion supérieure, ce qui conduit à des tensions extrêmes dans la conduite, au niveau de la tour de pose installée sur le navire, tensions pouvant atteindre 500 à 700 tonnes, voire 1000 tonnes et plus.

Dans ce type de conduite, l'espace annulaire rempli ou non d'un matériau isolant, est en général à une pression absolue inférieure à la pression atmosphérique, voire vidé de tout gaz, et l'on peut, en première approximation, considérer que radialement, la conduite interne résiste à la pression d'éclatement due au fluide interne, alors que l'enveloppe externe résiste à l'implosion créée par la pression hydrostatique au niveau du fond (p.g.h) qui est d'environ 1 MPa par tranche de 100 m d'eau, c'est-à-dire 30MPa pour une profondeur de 3000m. Un effet axial de dilatation ou d'étirement longitudinal dû à la pression, appelé « effet de fond », s'exerce sur la section circulaire des conduites externe et interne et parallèlement à l'axe desdites conduites et se répartit, en première approximation sur les deux conduites (car liées aux extrémités), au prorata des sections respectives de matériaux, en général de l'acier.

En effet, la pression interne P d'une conduite engendre d'une part un « effet de fond », ou « effet de piston », qui se caractérise par une force longitudinale axiale tendant à l'étirement ou la dilatation longitudinale de la conduite et a pour valeur F_{f}=P*s, s étant la section de la conduite. Et d'autre part, la pression interne engendre un « effet radial » qui a tendance à faire éclater la conduite, la force s'exerçant sur une longueur unitaire de paroi ayant pour valeur Fₑ=π*R*P , R représentant le rayon interne de la conduite.

La conduite interne doit donc elle aussi présenter une résistance et donc une épaisseur accrue pour les poses en grande profondeur pour résister aux effet de fond et effet radial d'éclatement.

Ainsi, le premier problème posé par la présente invention est de réaliser des conduites isolées de type PiP, mais allégées de manière à présenter un poids linéaire notablement réduit tout en présentant des caractéristiques mécaniques de renforcement telles que son comportement en fatigue soit apte à supporter les contraintes engendrées lors de la pose à grande profondeur.

Dans le cadre des installations par grande profondeur, les conduites sous-marines ainsi que les ensembles de conduites coaxiales sous-marines sont assemblés à terre en éléments de longueur unitaire, de l'ordre de 20 à 100 m selon la capacité de tenue du système de pose. Puis ils sont transportés ainsi en mer sur un navire de pose. Lors de la pose, les longueurs unitaires des divers éléments d'ensembles de conduites coaxiales sont raccordées les unes aux autres à bord du navire et au fur et à mesure de leur pose en mer. Il est donc important que ce raccordement puisse être intégré dans le procédé de montage et d'assemblage de la conduite et de pose de celle-ci au fond de la mer en le retardant le moins possible, et puisse donc être réalisé rapidement et aisément.

Lors de la pose par grand fond d'un PiP conventionnel, ledit PiP est soumis à flexion, principalement dans la partie basse proche du fond de la mer. La flexion est maximale au point de contact avec le sol car le rayon de courbure décroît depuis la surface jusqu'au point de contact avec le sol, où il est alors minimal, puis le PiP reposant sensiblement à l'horizontale sur le fond de la mer, présente alors un rayon de courbure infini. La flexion engendrée au cours de la pose crée des contraintes importantes dans chacun des tubes du PiP et dans la zone de raccordement de deux longueurs successives de PiP.

On utilise des pièces de jonction ou pièces de raccordement forgées en acier, assemblées aux extrémités desdits éléments d'ensembles de conduites coaxiales à assembler. La pièce de jonction à l'extrémité aval d'un premier élément d'ensemble de conduites coaxiales non encore assemblées, étant raccordé à la pièce de jonction à l'extrémité libre amont d'un deuxième élément d'ensemble de conduites coaxiales déjà assemblées en aval.

On connaît les brevets GB-2,161,565 et GB-2,191,842 qui décrivent un PiP et son mode d'assemblage, ainsi que deux modes de réalisation de pièces de jonction ou de raccordement en acier forgé, le premier brevet GB-2,161,565 décrivant une pièce forgée réalisée d'une seule pièce, le second GB-2,191,842 décrivant une pièce forgée en deux éléments, la jonction entre les deux éléments des deux pièces de jonction étant assurée par un filetage, ledit filetage étant encollé pour assurer l'étanchéité.

Dans les deux cas, la pièce forgée comprend deux branches de révolution dont une branche externe et une branche interne délimitant un espace annulaire, c'est-à-dire formant une fourche dont les extrémités cylindriques libres sont assemblées aux extrémités cylindriques respectivement des conduites externes et internes.

Toutefois, dans les deux modes de réalisation, on constate des lacunes dans la fiabilité mécanique du raccordement de longueur unitaire d'ensemble de conduites coaxiales équipées à leurs extrémités de ces pièces de raccordement ou jonction.

En effet, une des lacunes des pièces forgées de jonction proposées dans ces brevets antérieurs tient en ce que dans la zone de raccordement desdites pièces, le diamètre des pièces est réduit et correspond sensiblement à celui de la conduite interne. Il en résulte une variation très importante de l'inertie de la section transversale du PiP entre la zone courante dudit PiP, et ladite zone de raccordement entre deux dites longueurs unitaires de PiP, ceci conduit à créer un point de faiblesse à chacun de ces raccordements par soudage entre deux pièces forgées, la zone dudit soudage étant alors particulièrement sensible aux phénomènes de fatigue, tant durant la pose que pendant la durée de vie de la conduite.

Pour éviter cette zone de faiblesse et conserver une inertie de section transversale sensiblement constante, on peut augmenter l'épaisseur de la paroi de la pièce forgée dans toute la zone située entre la partie massive de ladite pièce forgée et la zone du chanfrein où sera effectuée la soudure. Mais, il faut alors en général quasiment doubler ladite épaisseur. Et, dans le cas des conduites de fort diamètre et devant être posées par grandes profondeurs, le soudage devient alors problématique en raison de la très forte épaisseur d'acier, ladite épaisseur pouvant atteindre 40 à 50mm, ce qui nécessite des procédés de soudage très délicats, voire dans certains cas quasiment irréalisables sans défauts compte tenu des effets dynamiques en mer sur la masse d'acier en fusion. De plus, lesdites soudures étant réalisées à bord des navires de pose, ces derniers ayant un coût horaire extrêmement élevé, le coût d'installation devient prohibitif et les risques de défaillance sont considérables en raison de la complexité desdites opérations de soudage sur site.

On préfère alors la méthode décrite dans le brevet FR-2,751,721 qui consiste en un mode de réalisation des extrémités d'un PiP, assorti d'un mode de renfort de la zone de raccordement entre deux longueurs unitaires de PiP par un manchon coulissant à jeu réduit sur l'enveloppe externe, ledit manchon coulissant étant solidarisé à ladite enveloppe externe par collage. Cette disposition permet d'augmenter localement l'inertie de la section transversale pour limiter les contraintes dans la zone de raccordement entre deux longueurs unitaires de PiP, mais nécessite la fabrication de plusieurs pièces mécaniques compliquées à monter et nécessite un raccordement relativement difficile à mettre en oeuvre. De plus le collage proposé reste sujet à fluage et se dégrade lors des cycles thermiques dont sont sujet les conduites au cours de leur durée de vie de 20 à 30 ans. Enfin, ce type de collage ne pourrait pas être envisagé de manière fiable dans le cas de liaisons fond surface, car les effets dynamiques de la houle et du courant sur la conduite en suspension entre le fond de la mer et le support flottant, dégraderaient rapidement le plan de collage induisant une fatigue rapide et excessive sur la zone de raccordement du PiP.

Ainsi un autre problème de la présente invention est de réaliser un raccordement des conduites isolées allégées de type PiP dont les zones de raccordement entre deux longueurs unitaires sont renforcées ce manière à ce que les contraintes engendrées lors de la pose soient minimisées.

Plus précisément un autre problème posé est de réaliser un raccordement de longueur unitaire d'ensemble de conduites coaxiales de type PiP amélioré de manière à faciliter la mise en oeuvre des moyens de raccordement et opérations de raccordement, notamment en optimisant les engins de pose, et dont les zones de raccordement entre deux longueurs unitaires sont renforcées, de manière à ce que les contraintes engendrées lors de la pose soient minimisées et que le comportement en fatigue, dans le cas des liaisons fond-surface soit radicalement amélioré.

Il est connu de réaliser des conduites intégralement en matériau composite. Mais celles-ci ont en général un coût élevé et présentent l'inconvénient majeur d'être flottantes dans certaines situations, ce qui impose de les alourdir par ajout de masse extérieure pour qu'elles restent en place après la pose ou même pour que la pose soit rendue possible.

En outre, et surtout, les conduites réalisées en matériau composite sont :
- soit réalisées en longueur continue et ne peuvent donc pas être réalisées par raccordement d'éléments unitaires de conduites coaxiales raccordés les uns aux autres à partir d'un navire de pose en mer,
- soit réalisées par raccordement d'éléments unitaires depuis un navire de pose en mer ; mais dans ce dernier cas, le raccordement desdits éléments unitaires en matériau composite présente des complications importantes compte tenu des contraintes dans la zone de raccordement de deux longueurs successives. En effet, des pièces de jonction réalisées en matériau composite ne seraient pas suffisamment résistantes compte tenu des contraintes au niveau du raccordement. D'autre part, des pièces de jonction en acier ne sont pas facilement adaptables à des éléments de conduite coaxiale en matériau composite.

Enfin, lorsque l'on veut faire circuler un fluide corrosif dans la conduite interne, tel que par exemple du H₂S, il est nécessaire de prévoir une surépaisseur interne en acier inoxydable approprié pour résister à cette corrosion, ce qui d'une part augmente encore le poids de la conduite et d'autre part est une réalisation complexe et coûteuse.

Un dernier problème à la base de la présente invention est donc de fournir un ensemble de conduites PiP comprenant une conduite interne dont la paroi interne est réalisée en acier spécial anti-corrosion sans l'alourdir et selon un mode de réalisation simplifié.

On connaît dans EP 0,635,667 des conduites sous-marines simples en acier dites frettées, car elles sont renforcées par un matériau composite déposé par enroulement de fibres de verre ou de carbone sur la longueur de chacune des rames sauf sur les portions extrêmes, lesdites portions extrêmes étant renforcées après soudage des dites rames entre elles à bord du navire de pose, au sein de la tour de pose en J, de manière à présenter une résistance sensiblement uniforme tout le long de ladite conduite. Dans ce type de conduite mixte, l'enroulement des fibres se fait selon un angle de 65 à 87°. La conduite acier doit être capable de reprendre l'intégralité de l'effet de fond, l'effet radial d'éclatement étant repris essentiellement par le renfort composite. Lors de la pose, l'intégralité de la tension de pose est reprise par la conduite en acier, le renfort en matériau composite n'intervenant pas de manière significative dans la résistance à la traction de la conduite mixte. Dans ce type de conduite simple mixte, le matériau composite joue alors seulement un rôle de frettage, et la conduite acier doit présenter une résistance suffisante pour reprendre les efforts de traction lors de la pose ainsi que l'effet de fond lorsque la conduite se trouve sous pression, ce qui impose une épaisseur légèrement réduite mais encore relativement importante de la paroi en acier de ladite conduite, notamment supérieure à plus de 50 % de l'épaisseur des extrémités non renforcées de la conduite ou d'une conduite en acier de même diamètre ayant à reprendre le même effet de fond. La réduction de poids obtenue par une telle disposition reste donc assez limitée. En outre, ce type de conduite ne présente pas de propriétés d'isolation thermique suffisantes.

Les différents problèmes à la base de la présente invention sont résolus selon la revendication 1 en fournissant un élément de conduite coaxiale dont la conduite interne est réalisée en un matériau mixte avec un tube interne métallique de très faible épaisseur, recouvert par des fibres minérales entourées autour dudit tube interne, à savoir d'épaisseur inférieure à 50 % d'une conduite en acier de même diamètre ayant à reprendre l'intégralité d'un même effet de fond.

Plus précisément, la présente invention fournit un élément unitaire de conduite sous-marine notamment pour assurer une liaison fond-surface constituée d'un ensemble de 2 éléments conduites coaxiales du type PiP comprenant un élément de conduite interne et un élément de conduite externe avec un espace annulaire entre les deux, de préférence comprenant un matériau d'isolation thermique dans ledit espace annulaire et comportant à chaque extrémité une pièce de jonction forgée en acier destinée au raccordement de deux dits éléments unitaires de conduites coaxiales, les dites pièces de jonction étant soudées à la fois aux extrémités des dites conduites internes et aux extrémités desdites conduites externes, caractérisé en ce que le dit élément de conduite interne comprend dans sa partie courante un tube interne en métal présentant une épaisseur réduite par rapport à l'épaisseur des extrémités de la dite conduite interne soudées aux dites pièces de jonction, l'épaisseur du dit tube interne étant inférieure à 50 % de celle desdites extrémités de la conduite interne, ledit tube interne étant recouvert d'un matériau comprenant des fibres continues longitudinales enroulées autour dudit tube interne de manière à recouvrir entièrement la surface du dit tube interne.

L'enroulement de fibres de matériau minéral ou composite autour du tube interne en acier permet d'alléger la conduite interne dans la mesure où les matériaux constitutifs des fibres sont moins lourds que l'acier tout en lui conférant des performances mécaniques aptes à renforcer la résistance de la conduite du tube interne à la fois vis-à-vis des effets de fond et effet radial d'éclatement. L'enroulement des fibres induit une force à composante axiale qui assure la reprise de l'effet de fond et à composante tangentielle qui assure la reprise de l'effet radial. La valeur respective des composantes axiale et tangentielle dépend de l'angle d'inclinaison de l'enroulement hélicoïdal des fibres autour du tube.

Selon la présente invention, ledit tube interne a uniquement la double fonction suivante de :
1/ apporter une raideur suffisante pour permettre le supportage dudit matériau composite lors de sa fabrication, le cas échéant avant réticulation, et
2/ constituer un écran résistant à la corrosion éventuelle d'un fluide circulant dans ladite conduite.

Mais, dans un élément unitaire de conduite coaxiale selon la présente invention, avantageusement, les dites fibres sont enroulées sensiblement circulairement ou hélicoïdalement selon un angle par rapport à l'axe longitudinal XX' dudit tube en position rectiligne d'au moins 75° de préférence supérieur à 87°, de préférence encore à 89°, de manière à assurer quasiment uniquement la reprise de l'effet radial.

En effet, dans un élément unitaire de conduites coaxiales selon l'invention, « l'effet de fond » est transmis par compression au sein de la couche d'enroulement de fibres jusqu'aux pièces de jonction forgées d'extrémité, lesquelles sont solidaires de la conduite externe, de sorte que celle-ci peut assurer la reprise des efforts de compression longitudinale et donc assurer la résistance globale de l'élément unitaire de conduites coaxiales aux efforts dus audit effet de fond, ainsi qu'aux efforts de tension lors de la pose au sein d'une tour de pose en J. Ainsi, les fibres enroulées de manière sensiblement circulaire assurent quasiment exclusivement la reprise des efforts dus à l'effet radial d'éclatement, celles-ci n'étant pas sollicitées pour reprendre les contraintes liées à l'effet de fond, et ceci conduit à pouvoir mettre en oeuvre une épaisseur de paroi encore plus réduite. Il en résulte un diamètre extérieur de ladite conduite interne plus faible encore, ce qui permet de mettre en oeuvre une conduite externe, elle aussi de diamètre interne inférieur, donc de diamètre extérieur plus faible et donc de réduire encore davantage le poids linéaire de l'ensemble de conduites coaxiales.

Avantageusement, les dites fibres sont enroulées autour du dit tube interne sur plusieurs couches de préférence d'au moins 5 couches superposées, les différentes couches pouvant comprendre une inclinaison des dites fibres symétrique par rapport à la perpendiculaire au dit axe longitudinal XX', ladite inclinaison alternée restant très faible, car proche de 90°. Ceci permet d'appliquer les différentes couches par enroulement à partir d'une même bobine de fibres ou filament en va-et-vient et en aller et retour le long dudit tube.

De préférence, les dites fibres sont enrobées dans un liant polymère organique soit réticulable, de préférence du type époxy, polyester, polyuréthane ou phénolique, soit thermoplastique, de préférence de type polyoléfine (Polyéthylène, Polypropylène), polyamide ou polyétheréther ketone (PEEK).

De préférence encore, ledit matériau composite se présente de préférence sous forme de bande ou filament comprenant les dites fibres enrobées dans un dit liant et le dit filament ou la dite bande étant enroulé(e) sensiblement hélicoïdalement autour dudit tube interne, de préférence selon un angle par rapport à l'axe longitudinal XX' dudit tube en position rectiligne supérieur d'au moins 75°, de préférence supérieur à 87°.

L'épaisseur des extrémités de la conduite interne selon l'invention est similaire à celle d'une conduite conventionnelle; elle est notamment proportionnelle au diamètre de la conduite. Plus particulièrement, l'épaisseur des extrémités de la conduite interne est de 5 à 35 mm et, plus particulièrement encore de 7 à 25 mm.

Plus particulièrement, pour un tube interne d'un diamètre de 100 à 500 mm, l'épaisseur dudit tube interne sera de 1 à 10 mm, de préférence de 2 à 5 mm, et ledit matériau composite est déposé sur une épaisseur de 5 à 50 mm, ledit matériau composite comprenant de préférence les proportions pondérales de 50 à 70% de fibres et 50 à 30% de liant.

Dans un mode de réalisation particulier, lesdites fibres sont des fibres de matériau minéral, organique ou métallique choisi parmi les carbone, kevlar, verre, titane et autres composés métalliques ou non, à très hautes performances élastiques.

Dans un mode préféré de réalisation, ladite conduite interne comporte à chaque extrémité dudit tube interne une pièce forgée de type virole intercalée entre ledit tube interne et ladite pièce de jonction comportant une paroi tubulaire de même diamètre interne que celui du dit tube interne à l'extrémité duquel elle est soudée, l'épaisseur de la paroi tubulaire desdites pièces forgées de type virole augmentant depuis leur extrémité soudée audit tube interne jusque vers leur extrémité soudée à ladite pièce de jonction, définissant ainsi un profilé s'inscrivant sensiblement dans une enveloppe conique et dont la surface externe, de préférence rugueuse, de préférence encore crantée ou filetée, est également recouverte d'un enroulement de dites fibres.

Un élément de conduites coaxiales selon l'invention permet d'utiliser un tube interne de faible épaisseur réalisé en acier inoxydable apte à résister à la corrosion du fluide que l'on souhaite véhiculer à l'intérieur de ladite conduite interne. Ainsi, il n'est pas nécessaire d'avoir recours à un gainage interne de la conduite interne pour lui conférer ses propriétés de résistance à la corrosion.

Pour améliorer encore le comportement en fatigue au niveau des raccordements d'éléments unitaires d'ensemble de conduites coaxiales selon l'invention, ladite pièce de jonction est délimitée comme suit :
■ dans une direction radiale par rapport à un axe longitudinal XX' de révolution de ladite pièce, elle est délimitée par une paroi interne cylindrique sensiblement de même diamètre que celui de la partie courante de ladite conduite interne, et par une paroi externe cylindrique de diamètre sensiblement égal au diamètre externe de la partie courante de ladite conduite externe, et
■ dans la direction axiale longitudinale XX',
   - du côté de ladite pièce de jonction destiné à être assemblé par soudage à l'extrémité desdites conduites externe et interne d'un dit élément d'un ensemble d'au moins deux conduites coaxiales, lesdites parois externe et interne de ladite pièce de jonction forment en section longitudinale des premières branches respectivement externe et interne sensiblement de même épaisseur que lesdites conduites externe et interne auxquelles elles sont destinées à être assemblées, lesdites premières branches externe et interne délimitant une première cavité annulaire, et
   - du côté opposé de ladite pièce de jonction destiné à être assemblé à une autre dite pièce de jonction, elle-même assemblée par soudage à l'extrémité d'un autre élément d'ensemble de deux conduites coaxiales, lesdites parois externe et interne forment en section longitudinale des deuxièmes branches respectivement externe et interne, délimitant une deuxième cavité annulaire,
   - les fonds desdites première et deuxième cavités étant espacés dans ladite direction longitudinale XX', de manière à délimiter une zone pleine de ladite pièce de jonction dans laquelle lesdites parois externe et interne forment les faces externe et interne d'une même paroi cylindrique.

De préférence, une pièce de jonction selon l'invention est constituée d'une unique pièce métallique forgée, c'est-à-dire constituée d'un seul tenant, de préférence en acier, ou bien encore de préférence en acier allié.

Avantageusement, un élément unitaire d'un ensemble d'au moins deux conduites coaxiales selon l'invention est caractérisé en ce que :
- il comporte à au moins une de ses extrémités, une pièce de jonction assemblée par soudage au niveau des extrémités desdites premières branches externe et interne et, respectivement des extrémités de même épaisseur desdites conduite externe et respectivement conduite interne,
- la longueur de dépassement de l'extrémité desdites premières branches interne et externe l'une par rapport à l'autre de chaque dite pièce de jonction, étant apte à s'adapter à la longueur de dépassement de l'extrémité desdites conduites externe et interne l'une par rapport à l'autre à l'extrémité desdits éléments de dits ensembles de conduites coaxiales,et
- la dite première cavité annulaire étant de préférence remplie de dit matériau d'isolation.

La présente invention a donc également pour objet un procédé d'assemblage de deux éléments unitaires constitués chacun d'un ensemble d'au moins deux conduites coaxiales selon l'invention, caractérisé en ce que l'on réalise les étapes dans lesquelles :
1) on assemble un dit premier élément unitaire d'ensemble de conduites coaxiales selon l'invention, comportant une première pièce de jonction, à l'extrémité aval, et un deuxième élément unitaire de dit ensemble de conduites coaxiale selon l'invention comportant une deuxième dite pièce de jonction, à l'extrémité amont, le cas échéant les deux dites deuxièmes branches externes des deux dites première et deuxième pièces de jonction étant de préférence de même épaisseur, et
2) on rapproche les unes des autres et on soude entre elles les extrémités libres des deux dits éléments d'un ensemble d'au moins deux conduites coaxiales selon l'invention à assembler, le cas échéant les extrémités libres des seules dites deuxièmes branches externe desdites première et deuxième pièces de jonction.

La formation desdites première et deuxième cavités annulaires permet d'une part d'établir une continuité au niveau du diamètre interne de la conduite interne et d'autre part de fournir une relative continuité et identité d'inertie de la section transversale, de la zone courante du PiP et de la zone de raccordement, l'épaisseur de la branche externe de la pièce de jonction forgée étant sensiblement égale ou légèrement supérieure à l'épaisseur courante de la conduite externe.

L'éloignement des extrémités desdites premières branches externe et interne par rapport au fond de la première cavité et de l'extrémité de ladite deuxième branche externe par rapport au fond de ladite deuxième cavité, permet de réaliser les soudages dans les meilleures conditions, car la masse d'acier de part et d'autre de la zone de soudage est sensiblement égale et la zone de fusion ne se trouve alors pas perturbée par un « effet radiateur » provoqué par la zone pleine et massive située entre les fonds desdites première et deuxième cavités, ladite perturbation consistant en un refroidissement déséquilibré entre la gauche et la droite de ladite zone de soudure.

Enfin, la continuité du diamètre de la paroi externe au niveau de la dite pièce de jonction par rapport à celui des parties courantes des conduites externes permet de créer une augmentation importante de l'inertie de la section transversale au niveau de la zone de raccordement de deux pièces de jonction adjacentes, et donc de renforcer le raccordement là ou précisément les contraintes sont maximales. En effet, l'inertie de la section transversale d'une conduite par rapport à son centre varie comme la puissance 4 du rayon, ce qui conduit à une épaisseur nécessaire considérable dans le cas de l'art antérieur tel que décrit dans GB-2,161,565 GB-2,191,842. En revanche, si la section transversale considérée correspond à celle de la conduite externe du PiP, l'épaisseur nécessaire est fortement réduite, voire même dans certains cas divisée par deux, ce qui simplifie considérablement les opérations d'assemblage par soudage effectuées à bord des navires d'installation, dans des conditions difficiles.

D'autre part le fait que deux pièces de jonction adjacentes soient soudées, uniquement au niveau de l'extrémité desdites deuxième branches externes, permet que la totalité des phénomènes de transferts de charge et de contraintes soit localisée au niveau externe et n'implique pas lesdites parois internes, ce qui permet de mieux contrôler les risques de fissuration ou phénomènes de fatigue et d'éviter que le dispositif ne se ruine complètement au niveau de la paroi interne.

En outre, le fait que les deux extrémités desdites deuxièmes branches internes de deux pièces adjacentes selon l'invention, ne soient pas soudées entre elles, autorise des mouvements infimes desdites parois internes face à face dus à des éventuelles flexions ou variations de pression ou de température et autorise que lesdites parois internes puissent se déforment plastiquement et permettre un matage desdites deuxièmes branches internes sans risquer de transférer des charges de compression de contact, ce qui permet d'éviter de perturber la répartition des contraintes dans la zone d'assemblage et que l'essentiel des contraintes soit repris au niveau des parois externes desdites pièces.

La formation de ladite paroi interne cylindrique qui assure une continuité presque complète avec la conduite interne, permet d'éviter des phénomènes de turbulence du type vortex dans la circulation du fluide à l'intérieur du dispositif après assemblage, au niveau du raccordement de deux dites pièces de jonction de deux portions de PIP adjacentes.

Toutes ces caractéristiques contribuent à améliorer radicalement le comportement en flexion, ainsi qu'en fatigue, d'un dispositif impliquant deux éléments unitaires d'ensemble coaxial équipé de dites pièces de jonction et raccordées l'une à l'autre, à bord des navires d'installation.

Par ailleurs, la fabrication et l'assemblage desdites pièces de jonction sont relativement aisés et fiables en ce qui concerne le raccordement de deux pièces de jonction adjacentes et le raccordement d'une pièce de jonction avec l'extrémité d'un ensemble de d'au moins deux conduites coaxiales.

On notera que ladite deuxième cavité ne doit pas être étanche après raccordement de deux pièces de jonction, vis-à-vis de l'intérieur de ladite paroi interne et de ladite conduite interne car lors du démarrage de la circulation d'un fluide à l'intérieur, celui-ci devra migrer vers cette deuxième cavité, l'étanchéité étant assurée par la soudure externe au niveau de l'extrémité desdites deuxièmes branches externes, le fluide se trouvant piégé durant toute le durée de vie de l'installation au niveau de cette deuxième cavité.

Selon des caractéristiques préférées et avantageuses de ladite pièce de jonction :
- l'extrémité libre de ladite deuxième branche externe présente une forme, de préférence un chanfrein, la rendant apte à être soudée à l'extrémité libre d'une autre dite deuxième branche externe d'une autre pièce de jonction à laquelle elle est destinée à être assemblée, ladite autre pièce de jonction étant, elle-même, assemblée à l'extrémité d'un deuxième dit élément d'ensemble de deux conduites coaxiales, et
- l'extrémité libre de ladite deuxième branche interne présente une forme la destinant à buter en contact sans lui être soudée avec l'extrémité libre d'une autre dite deuxième branche interne d'une autre dite pièce de jonction assemblée à l'extrémité d'un dit deuxième élément d'ensemble de conduites coaxiales ;
- les deux dites deuxièmes branches externes des deux dites pièces de jonction destinées à être assemblées par soudure étant de même épaisseur, et d'épaisseur supérieure à l'épaisseur de la conduite externe du PiP, et de préférence d'épaisseur supérieure à l'épaisseur de ladite deuxième branche interne de ladite pièce de jonction, et
- l'extrémité de ladite deuxième branche externe présente un chanfrein tourné vers l'extérieur, apte à permettre une soudure depuis l'extérieur ;
- les extrémités libres desdites premières branche externe et interne présentent une forme, de préférence en chanfrein, les rendant aptes à être soudées aux extrémités libres respectivement desdites conduites externe et interne, de préférence aptes à être soudées respectivement depuis l'extérieur de la dite conduite externe pour lesdites premières branches externes et depuis l'intérieur de ladite conduite interne pour lesdites premières branches internes ;

Dans un mode de réalisation avantageux, ladite deuxième branche interne comporte sur sa face frontale à son extrémité libre dans la direction longitudinale ZZ', un élément de centrage mâle ou femelle, apte à coopérer avec un élément, respectivement femelle ou mâle de la face frontale de l'extrémité libre d'une dite autre deuxième branche interne d'une autre dite pièce de jonction à laquelle elle est destinée à être assemblée, de manière à :
- assurer un effet de centrage des deux dites pièces de jonction lors de leur approche en vue de leur assemblage, et
- ajuster l'écartement des faces frontales d'extrémité des dites deuxièmes branches externes de dites pièces de jonction à assembler lors de leur approche en vue de leur assemblage pour que, de préférence, l'assemblage puisse se faire par soudure et que ladite soudure puisse être réalisée sur toute l'épaisseur desdites faces frontales des extrémités desdites deuxièmes branches externes destinées à être assemblées.

Plus particulièrement, ledit élément mâle est constitué par une forme protubérante, de préférence de révolution, de ladite face frontale à l'extrémité de ladite deuxième branche interne, ledit élément mâle étant apte à coopérer avec un élément femelle correspondant, constitué par une forme creuse complémentaire, de préférence de révolution, dans la face frontale à l'extrémité d'une dite deuxième branche interne d'une dite autre pièce de jonction à laquelle elle est destinée à être assemblée.

Plus particulièrement encore, ladite forme protubérante dudit élément mâle est formée par un joint annulaire rapporté sur ladite face frontale à l'extrémité de ladite deuxième branche interne.

Dans un mode de réalisation avantageux, l'épaisseur de ladite deuxième branche interne va en diminuant entre le fond de ladite deuxième cavité annulaire et ladite face frontale de ladite deuxième branche interne, la surface de ladite deuxième branche interne s'inscrivant ainsi par exemple dans une enveloppe conique.

Cette paroi interne amincie au niveau de ladite deuxième branche interne lui permet de jouer le rôle de butée éventuelle tout en autorisant plus facilement sa déformation plastique et son matage éventuel lors des mouvements de flexion ou des variations de pression ou de température, l'essentiel des contraintes étant quasi intégralement transmise au niveau de ladite deuxième branche externe.

Dans une variante de réalisation avantageuse l'extrémité de ladite première branche interne du côté de ladite pièce de jonction apte à être directement assemblée à un dit élément d'un dit ensemble de conduites coaxiales, dépasse dans ladite direction longitudinale axiale XX' par rapport à l'extrémité d'une dite première branche externe, de manière à ce que ladite pièce de jonction puisse être assemblée à un dit ensemble de conduites coaxiales dont l'extrémité de ladite conduite externe dépasse sensiblement d'une même longueur par rapport à celle de ladite conduite interne. Ce mode de réalisation est rendu nécessaire pour que la réalisation des soudures de raccordement de la pièce de jonction forgée avec les conduites interne et externe puisse être effectuée depuis l'extérieur.

Plus particulièrement, l'extrémité de ladite première branche externe présente un chanfrein tourné vers l'extérieur apte à permettre une soudure depuis l'extérieur et l'extrémité de ladite première branche interne présente un chanfrein tournée vers l'intérieur apte à permettre une soudure depuis l'intérieur de ladite conduite interne.

Dans un mode de réalisation particulier, lesdites première et deuxième cavités annulaires présentent une forme oblongue en section longitudinale, les fonds et présentant une forme incurvée dont les rayons de courbure sont, de préférence, identiques.

Plus particulièrement encore :
- les fonds desdites première et deuxième cavités, sont espacés d'une longueur de 0.5 à 3 fois l'épaisseur maximale de ladite pièce de jonction forgée dans ladite zone pleine,
- la longueur desdites premières branches interne et externe forme une dite première cavité d'une profondeur de 1 fois à 5 fois l'épaisseur des conduites interne et respectivement externe , et
- la longueur desdites deuxièmes branches externe et interne forme une dite deuxième cavité d'une profondeur de 1 fois à 5 fois l'épaisseur de ladite deuxième branche externe, et
- l'épaisseur desdites deuxièmes branches externes étant supérieure de 5 à 100%, de préférence de 30 à 70% de l'épaisseur de la conduite externe.

Selon des caractéristiques particulières d'un procédé d'assemblage de deux éléments unitaires d'ensemble de deux conduites coaxiales selon l'invention :
- l'une au moins desdites deuxièmes branches internes desdites première et deuxième pièces de jonction à assembler, présente une épaisseur diminuant depuis le fond de ladite deuxième cavité vers ladite face frontale à l'extrémité de ladite deuxième branche interne, et
- la longueur de dépassement de l'extrémité desdites deuxièmes branches interne et externe l'une par rapport à l'autre d'une dite première pièce de jonction, est apte à s'adapter à la longueur de dépassement de l'extrémité desdites deuxièmes branches interne et externe l'une par rapport à l'autre d'une dite deuxième pièce de jonction à laquelle ladite première pièce de jonction est assemblée, et
- lesdites deuxièmes branches externe et interne de chacune des deux dites pièces de jonction sont telles que leurs extrémités sont sensiblement au même niveau dans ladite direction longitudinale axiale XX'.

D'autres caractéristiques et avantages de la présente invention apparaîtront à la lumière de la description détaillée qui va suivre, en référence aux figures suivantes dans lesquelles :
- La figure 1a est une coupe longitudinale axiale d'un PIP comportant une conduite interne mixte métal-composite et une première pièce de jonction 6a soudée à son extrémité selon un premier mode de soudage,
- La figure 1b est une coupe longitudinale axiale de la seconde extrémité du PiP selon la figure 1a, comportant une deuxième pièce de jonction 6b soudée selon un second mode de soudage,
- La figure 2 est une coupe longitudinale axiale d'une conduite interne en matériau mixte métal-composite 2₂, comportant un tube interne mince en métal 2₁, des viroles d'extrémité 2₃ profilées et un renfort en matériau composite enroulé sur ledit tube interne mince en métal, et solidaire de ce dernier ainsi que des viroles, dont la surface externe est détaillé sur la figure 2a,
- La figure 3 est la vue en plan d'un mode de fabrication préféré du renfort composite correspondant à la figure 2,
- La figure 4 est une coupe longitudinale axiale du raccordement de deux longueurs de PiP équipées chacune d'une pièce de jonction 1 a, 1b à leur extrémité,
- Les figures 4a à 4e représentent des variantes de réalisation des extrémités des pièces de jonction au niveau de leur raccordement.
- La figure 5a représente une coupe longitudinale axiale d'une conduite en général, et montre l'effet de fond engendré par une pression interne P à l'intérieur de ladite conduite ; les figures 5b - 5c montrent les efforts radiaux d'éclatement de la conduite sous l'effet de la pression interne P.

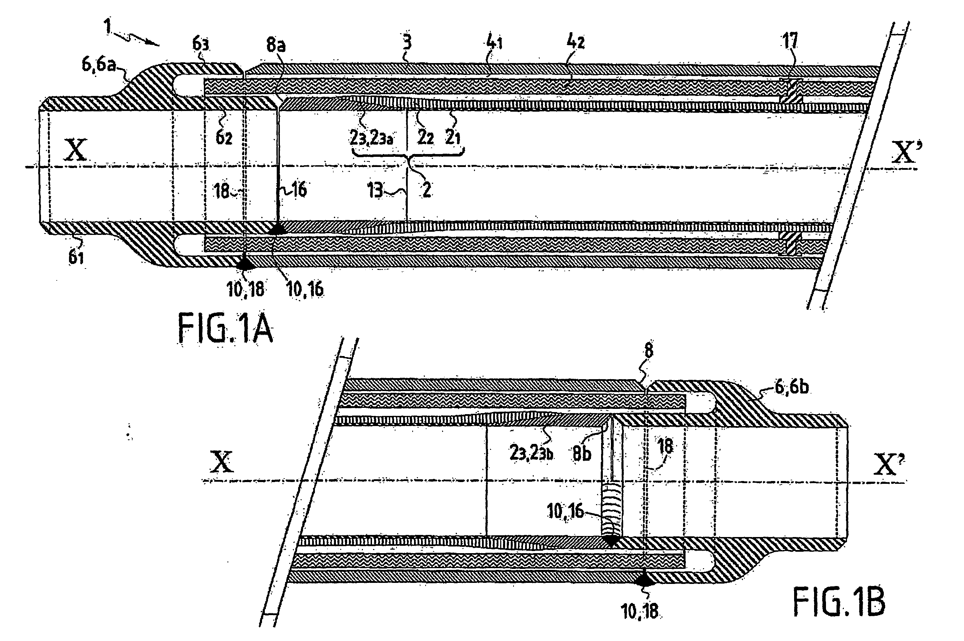

Dans les figures 1a-1b on a représenté une conduite 1 de type PiP constituée d'une conduite 3 solidarisée par soudure à une première pièce de jonction forgée 6a située sur la gauche de la figure 1a et à une seconde pièce de jonction forgée 6b située sur la droite de la figure 1 b.

La pièce de jonction forgée 6a est une pièce de révolution présentant :
- sur sa gauche, un forme tubulaire simple 6₁ dont le diamètre intérieur correspond au diamètre de la conduite interne 2, un chanfrein 8 est usiné de manière à permettre de la raccorder par soudage 10 à l'extrémité de la pièce de jonction forgée 6b d'une autre longueur unitaire de PiP, et
- sur sa droite, deux formes tubulaires concentriques 6₂, 6₃, la forme extérieure 6₃ se raccordant par soudure à la conduite externe 3, et la forme tubulaire intérieure 6₂ se raccordant à l'extrémité de la conduite interne 2. Les soudures de la conduite interne et de l'enveloppe externe sur la pièce de jonction forgée 6a sont effectuées de manière connue depuis l'extérieur de la conduite.

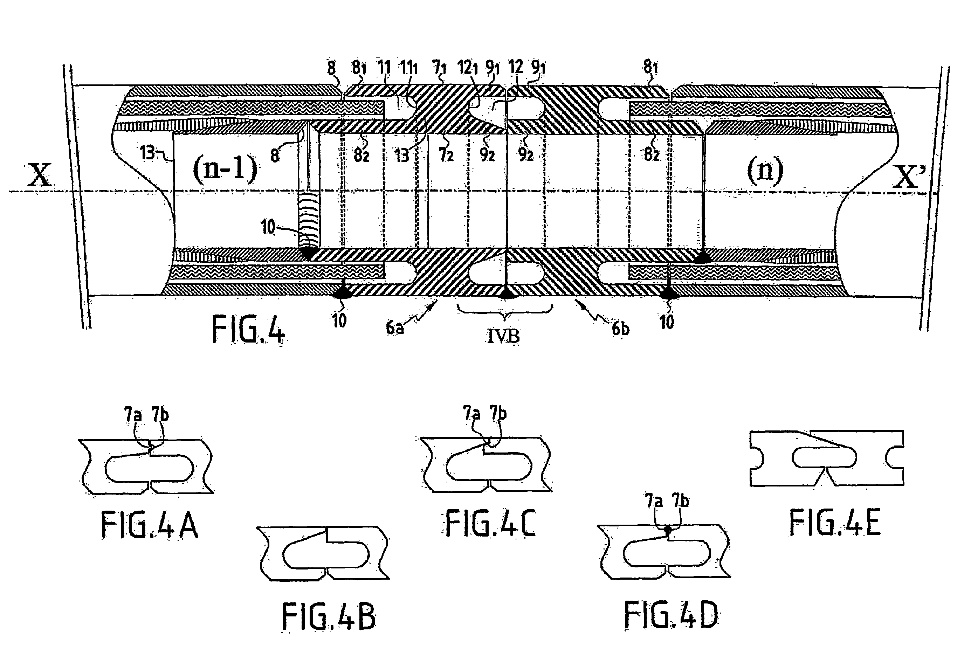

Pour la clarté des descriptions, sur les figures 1a, 1b et 4, les divers éléments constitutifs ont été représentés soudés en partie basse desdits dessins, et, en partie haute, positionnés face-à-face avant réalisation desdites soudures.

La pièce de jonction forgée 6b est similaire à la pièce 6a mais la soudure de la conduite interne est réalisée à partir de l'intérieur de ladite conduite, et de ce fait présente un chanfrein 8 tourné vers l'intérieur comme explicité sur la figure 1 b.

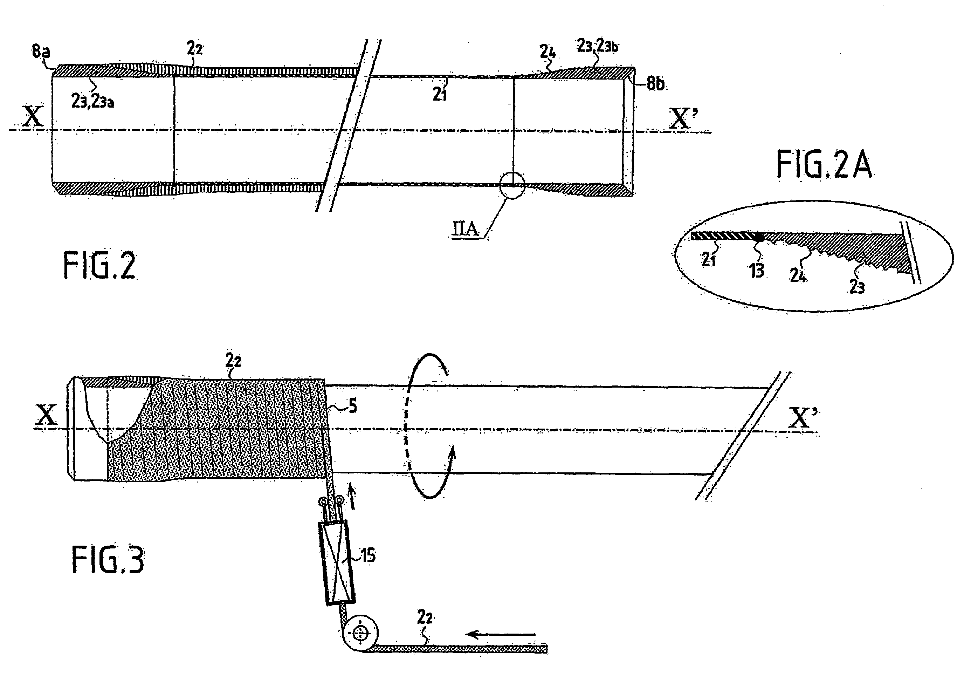

La conduite interne 2 en matériau mixte métal-composite est décrite dans la figure 2 et comporte un tube interne 2₁ mince en métal, de préférence en acier inox, assemblé par soudage en 13 sur des viroles d'extrémité profilées 2₃a, 2₃b, la virole 2₃a présentant un chanfrein 8a tourné vers l'extérieur, et la virole 2₃b un chanfrein 8b tourné vers l'intérieur pour venir coopérer avec les pièces de jonction forgées 6a-6b, comme explicité précédemment. La figure 2a détaille l'assemblage par soudure 13 entre le tube interne en métal 2₁ et la virole forgée 2₃. L'épaisseur de la paroi des viroles augmente jusqu'à ce que leur diamètre externe égale sensiblement celui des pièces de jonction 6, 6a-6b. La surface externe des viroles présente donc une forme conique, de cette dernière présentant en outre une forme onduleuse de préférence crantée par filetage 2₄. les viroles 2₃ ont une double fonction de liaison entre le tube interne fin et les pièces de jonction 6a-6b et d'ancrage des fibres du matériau composite enroulé autour de sa surface externe. Ainsi les viroles peuvent transmettre les efforts de compression interne de la conduite sous pression, transmis par le matériau composite 2₂ respectivement à chacune des viroles 2₃a-2₃b.

Le matériau composite 2₂ est constitué d'un enroulement hélicoïdal d'une nappe de fibre de carbone de section rectangulaire 5mm x 1 mm constituée de filament de 7 microns de section unitaire qui passe tout d'abord, dans un état non réticulé, dans une unité d'imprégnation 15 dans laquelle la fibre est enrobée dans un polymère organique réticulable à l'état non complètement réticulé, tel qu'un polymère Epoxy ou Polyuréthane. Le filament est alors enroulé en spirale, de manière connue, comme représenté sur la figure 3, pour constituer une masse homogène dont les fibres sont orientées avec un inclinaison de l'ordre de 87-89° de manière à résister sensiblement uniquement à l'effet radial d'éclatement lorsque la conduite est soumise à pression interne P. La réticulation complète intervient après enroulement autour du tube 2₁ et de la virole 2₃.

Les fibres représentent 50 à 70% en volume du composite final. Le filament est enroulé sur plusieurs couches, par exemple au moins 5. Ainsi le matériau composite 2₂ représente une épaisseur d'au moins 5mm pour une épaisseur du tube interne 2₁ réduite à 1 à 10 mm pour un diamètre interne de tube 2₁ de 200 à 500 mm.

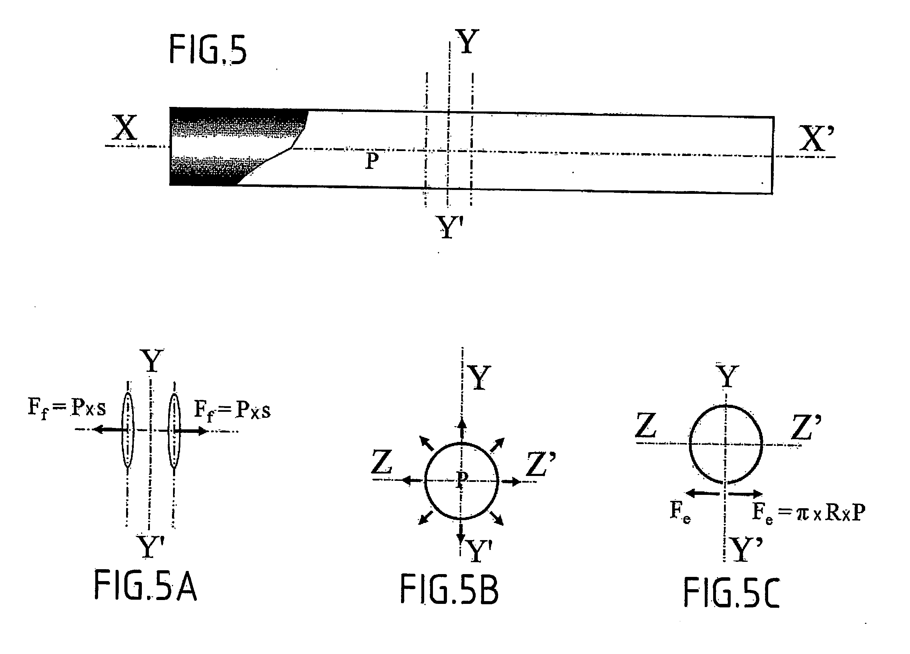

Comme explicité sur les figures 5 et 5a-5c, la pression interne P d'une conduite engendre d'une part un effet de fond, ou effet de piston, représenté sur la figure 5a et qui a pour valeur F_{f}=P*s, s étant la section de la conduite, et d'autre part un effet radial qui a tendance à faire éclater la conduite, la force s'exerçant sur une longueur unitaire de paroi étant représentée sur la figure 5c et ayant pour valeur Fₑ=π*R*P , R représentant le rayon interne de la conduite.

Dans le PiP selon l'invention, l'angle d'inclinaison des fibres est de préférence supérieur à 87°, notamment d'au moins 89°, car la reprise de l'effet de fond par les fibres ou filaments n'est pas requise. En effet, l'effet de fond est transmis par compression au sein de la matrice du matériau composite 2₂, jusqu'aux pièces de jonction forgées 6a-6, lesquelles sont solidaires de la conduite externe qui assure alors la reprise des efforts et donc la résistance globale de l'élément 1 de PiP aux efforts dus audit effet de fond, ainsi qu'aux efforts de tractions engendrés lors de l'installation depuis un navire de pose, au sein d'une tour de pose en J.

Ainsi, les fibres de matériau composite 2₂ enroulées de manière sensiblement circulaires, c'est-à-dire avec un angle de spirale supérieur à 87-89° comme explicité sur la figure 3 sont positionnées pour résister aux efforts par unité de longueur Fₑ, tandis que l'effet de fond F_{f} sera transmis par compression au sein du matériau composite 2₂ jusqu'aux extrémités de ladite conduite interne 2, puis transmis aux pièces de jonction forgées 6a-6b et repris par l'enveloppe externe 3 qui est dimensionnée en conséquence.

A titre d'exemple, une conduite de type PiP selon l'art antérieur de 288.85mm de diamètre intérieur, dimensionnée pour résister à une pression interne de fluide de 250 bars, présentant un espace entre conduite interne et enveloppe externe destinée à recevoir un système d'isolation de type aérogel, de 23 mm et devant être posée par 2500 m de profondeur d'eau, possède les caractéristiques suivantes :
- diamètre intérieur de la conduite interne = 288.85mm
- épaisseur de la conduite interne : 17.5mm
- diamètre intérieur de l'enveloppe externe : 369.85mm
- épaisseur de l'enveloppe externe : 17.5mm
- poids unitaire de la longueur courante de PiP vide dans l'eau : 171.59 kg/ml

Une conduite de performances similaires réalisée selon l'invention présente en partie courante les caractéristiques suivantes :
- diamètre intérieur de la conduite interne = 288.85mm
- épaisseur de la conduite interne mince en inox : 2mm
- épaisseur de la conduite interne en composite : 12.5mm
- diamètre intérieur de l'enveloppe externe : 347.85mm
- épaisseur de l'enveloppe externe : 17.5mm
- poids unitaire de la longueur courante de PiP vide dans l'eau : 69.22 kg/ml

Ainsi, le poids unitaire de la partie courante de la conduite interne 2 se trouve réduit, non seulement grâce à l'utilisation de matériau composite 2₂ moins pesant que l'acier, mais aussi grâce aux très hautes performances des fibres de carbone qui ne sont appliquées que pour résister à l'éclatement et qui ne sont pas sollicitées directement pour reprendre les contraintes liées à l'effet de fond, ce qui conduit à une épaisseur de paroi réduite de manière significative. Il en résulte un diamètre extérieur de conduite interne plus faible, ce qui conduit à une enveloppe externe 3, elle aussi de diamètre extérieur plus faible, donc de poids linéaire plus faible, ceci participant de manière significative au gain global de poids linéaire recherché, qui dans l'exemple cité représente une diminution du poids linéaire de la conduite posée vide dans l'eau de mer, de 59.66%.

Dans un mode de réalisation de fabrication d'une conduite isolée ou d'un ensemble de conduites isolées selon l'invention, représenté sur les figures 1a et 1b, on réalise les étapes dans lesquelles
1) on soude à chacune des extrémités d'un tube interne métallique 2₁ une virole d'extrémité 2₃ profilée à surface structurée 2₄, de type 2₃a sur la gauche et de type 2₃b sur la droite ; puis
2) on enroule de manière sensiblement circulaire autour du tube interne 2₁ et des viroles 2₃, un renfort en matériau composite 2₂ constitué de filament de fibre enrobe dans un polymère réticulable,dans un état non réticulé en partant d'une extrémité, pour atteindre la seconde extrémité de la conduite interne 2, puis on réticule l'ensemble ; puis
3) on soude en 16, depuis l'extérieur, l'extrémité de la virole d'extrémité profilée 2₃a sur la pièce de jonction forgée 6a ; puis
4) on insère, de la droite vers la gauche, la conduite externe 3 autour de la conduite interne 2, on la maintient de manière concentrique à cette dernière à l'aide d'éléments centreurs 17, puis on la soude depuis l'extérieur, en 18 sur la pièce de jonction forgée 6a ; puis
5) on insère le matériau isolant 4₂ entre lesdites conduites interne 2 et externe 3 ; puis
6) on présente la pièce de jonction forgée 6b à l'extrémité droite des conduites interne 2 et externe 3 et on ajuste la concentricité des divers éléments les uns par rapport aux autres ; puis
7) on soude ladite pièce de jonction forgée 6b d'une part sur la conduite externe 3 en procédant depuis l'extérieur en 18, et, on soude la même dite pièce 6b sur la conduite interne 2 en 16, en procédant depuis l'intérieur de la conduite ; puis
8) on tire au vide, le cas échéant, l'espace 4₁ compris entre la conduite interne et la conduite externe ; puis on referme de manière étanche l'orifice de tirage au vide (non représenté).

Dans une version préférée de l'invention, les pièces d'extrémité forgées 6a-6b sont réalisées comme explicité sur la figure 4.

Ladite pièce de jonction 6a, 6b est délimitée comme suit :
■ dans une direction radiale par rapport à un axe longitudinal XX' de révolution de ladite pièce, elle est délimitée par une paroi interne cylindrique 7₂ sensiblement de même diamètre que celui de la partie courante de ladite conduite interne 2₂, et par une paroi externe 7₁ cylindrique de diamètre sensiblement égal au diamètre externe de la partie courante de ladite conduite externe 3, et
■ dans la direction axiale longitudinale XX',
   • du côté de ladite pièce de jonction destiné à être assemblé par soudage 10 à l'extrémité desdites conduites externe et interne d'un dit élément d'un ensemble d'au moins deux conduites coaxiales, lesdites parois externe 7₁ et interne 7₂ de ladite pièce de jonction forment en section longitudinale des premières branches respectivement externe 8₁ et interne 8₂ sensiblement de même épaisseur que lesdites conduites externe 3 et interne 2 auxquelles elles sont destinées à être assemblées, lesdites premières branches externe 8₁ et interne 8₂ délimitant une première cavité annulaire 11, et
   • du côté opposé de ladite pièce de jonction destiné à être assemblé à une autre dite pièce de jonction, elle-même assemblée par soudage 10 à l'extrémité d'un autre élément d'ensemble de deux conduites coaxiales, lesdites parois externe 7₁ et interne 7₂ forment en section longitudinale des deuxièmes branches respectivement externe 9₁ et interne 9₂, délimitant une deuxième cavité annulaire 12,
   • les fonds 11₁, 12₁ desdites première et deuxième cavités 11, 12 étant espacés dans ladite direction longitudinale XX', de manière à délimiter une zone pleine 13 de ladite pièce de jonction dans laquelle lesdites parois externe 7₁ et interne 7₂ forment les faces externe et interne d' une même paroi cylindrique.

Comme montré sur la figure 2, la première cavité annulaire 11 est ouverte sur l'espace annulaire 4₁ et peut recevoir le matériel d'isolation 4₂ de façon à continuer l'isolation de la conduite le plus loin possible.

Après assemblage et raccordement de deux longueurs unitaires de PiP équipées de pièces de jonction forgées selon l'invention, la deuxième cavité annulaire 12 d'une première pièce de jonction à l'extrémité aval d'une première longueur de PiP est ouverte sur une deuxième cavité annulaire d'une deuxième pièce de jonction 6a à l'extrémité amont d'une deuxième longueur de PiP formant ainsi une chambre formée par soudage au niveau des extrémités des deuxièmes branches externes 9₁. Mais cette chambre n'est pas étanche, car l'extrémité des deuxièmes branches internes 9₁ des deux pièces de jonction 6a, 6b, n'est pas soudée, les faces desdites branches étant simplement en contact l'une avec l'autre.

Selon l'invention, les extrémités libres desdites premières branches externe 8₁ et interne 8₂ présentent une forme, en chanfrein 8, ce qui permet d'effectuer de manière connue une première passe de soudage dite « de pleine pénétration », suivi d'un remplissage complet du chanfrein comme explicité en 10. Sur la figure 4a à droite, les chanfreins 8 sont tournés vers l'extérieur et sont donc aptes à être soudés depuis l'extérieur desdites conduites externe 8₁ et interne 8₂. Sur la figure 4b à gauche, les chanfreins 8 sont tournés vers l'extérieur à l'extrémité de ladite première branche externe et vers l'intérieur à l'extrémité de ladite première branche interne, les rendant aptes à être soudés respectivement depuis l'extérieur dudit ensemble pour lesdites premières branches externes et depuis l'intérieur de ladite conduite interne pour lesdites premières branches internes.

Sur la figure 4, les extrémités libres de ladite deuxième branche externe 9₁ présentent une forme en chanfrein 8 tourné vers l'extérieur d'une première pièce de jonction 1a la rendant apte à être soudée depuis l'extérieur à l'extrémité libre d'une autre dite deuxième branche externe d'une autre pièce de jonction 6b à laquelle elle est destinée à être assemblée, ladite autre pièce de jonction étant, elle-même, à l'extrémité d'un deuxième élément d'ensemble de deux conduites coaxiales.

Dans la pièce de jonction forgée 6a, l'extrémité de ladite première branche interne 8₂ du côté de ladite pièce de jonction apte à être directement assemblée à un dit élément d'un dit ensemble de conduites coaxiales, dépasse dans ladite direction longitudinale axiale XX' par rapport à l'extrémité d'une dite première branche externe 8₁, de manière à ce que ladite pièce de jonction puisse être assemblée par soudage à un dit ensemble de conduites coaxiales dont l'extrémité de ladite conduite externe dépasse par rapport à celle de ladite conduite interne.

Dans une version préférée, les pièces de jonction forgées 6a-6b sont réalisées comme explicité sur la figure 4 et présentent un diamètre externe et une épaisseur de paroi sensiblement égaux, de préférence égaux, à celui de la portion courante d'enveloppe externe. En procédant ainsi, la conduite présente sur toute sa longueur une inertie sensiblement constante, ce qui évite les accumulations de contraintes au niveau des raccordements entre deux longueurs unitaires de PiP et améliore considérablement le comportement en flexion et en fatigue de la conduite et lui permet alors de résister, surtout dans le cas des liaisons fond-surface soumises aux effets de la houle et du courant, pendant toute la durée de vie des installations qui atteint et dépasse 30 ans.

Pour éviter les phénomènes de vortex indésirables au niveau du raccordement de deux pièces de jonction forgées 6a-6b de deux portions de PiP adjacentes, lorsque le pétrole brut circule à l'intérieur de la conduite interne, le diamètre interne de la pièce de jonction forgée 6a est prolongé jusqu'à la face de jonction avec son correspondant 1b, mais la jonction n'est pas soudée, de manière à éviter les phénomènes de transfert de charge et de contraintes entre l'enveloppe externe et la conduite interne, ce qui risquerait de conduire à des fissurations ou des phénomènes de fatigue qui ne manqueraient pas de ruiner complètement la conduite. Les deux prolongations de la partie interne on donc un simple rôle de continuité du diamètre interne de la conduite interne et elles peuvent être usinées de multiples manières telles que représentées sur les figures 4a-4e.

En figure 4a, la face frontale 7 de la pièce d'extrémité forgée 6b présente une forme mâle de révolution qui coopère avec la forme femelle correspondante de la face frontale de la pièce de jonction forgée 6a, assurant ainsi non seulement un effet de centrage automatique des deux pièces d'extrémité forgées lors de leur approche en vue de l'assemblage final sur site de la conduite au sein de la tour de pose en J, mais aussi il permet d'ajuster l'écartement des faces parallèles des deux chanfreins 8, écartement qui doit être extrêmement précis pour que la soudure puisse être réalisée, de manière connue, en pleine pénétration et ainsi présenter une résistance optimale.

La forme représentée sur la figure 4b ne permet pas l'auto-centrage des deux pièces l'une par rapport à l'autre et nécessite un dispositif externe ou interne de centrage lors de la soudure, mais elle permet de garantir l'écartement des pièces dans la zone du chanfrein. On notera de plus, que la pièce de jonction forgée 6b présente une paroi amincie, ce qui lui permet de jouer le rôle de butée pour la phase de soudage. Mais, du fait de son amincissement, en cas de mouvements infimes des parois face-à-face dus aux flexions, aux variations de pression et de température, ladite paroi amincie aura tendance à se déformer plastiquement et à se mater, car elle ne présente alors pas la section suffisante, donc la résistance suffisante pour transférer les charges de compression de contact. On évite ainsi de perturber la répartition des contraintes dans cette zone de l'assemblage et la quasi intégralité des contraintes sont reprises au niveau des branches externes 9₁. Le comportement en flexion lors de la pose s'en trouve grandement amélioré et dans le cas de liaisons fond-surface, le comportement en fatigue permet d'atteindre les objectifs de durée de vie, c'est-à-dire 30 ans voire plus, et ceci, même dans des mers réputées difficiles, telles la Mer du Nord ou le Golfe du Mexique.

Sur les figures 4a à 4d, l'une seulement desdites deuxièmes branches internes 9₂ desdites première et deuxième pièces de jonction à assembler, présente une épaisseur diminuant depuis le fond 11₁ de ladite deuxième cavité vers ladite face frontale 7 à l'extrémité de ladite deuxième branche interne 5₂, et lesdites deuxièmes branches externe 9₁ et interne 9₂ de chacune des deux dites pièces de jonction sont telles que leurs extrémités sont sensiblement au même niveau dans ladite direction longitudinale axiale de leurs deuxièmes branches interne 9₂ et externe 9₁. Mais on pourrait envisager que chacune des pièces forgées 6a-6b présente la même forme conique conduisant à une section de contact réduite pour éviter les phénomènes indésirables décrits précédemment.

Sur la figure 4e les deux deuxièmes branches internes présentent une épaisseur diminuant depuis le fond de la deuxième cavité jusque vers l'extrémité, mais dans ce cas elles se chevauchent l'une par-dessus l'autre, leurs faces frontales d'extrémité n'étant plus alors en vis à vis.

A titre d'exemple, pour une pièce de jonction forgée 6a de 300mm de diamètre interne, et présentant une épaisseur de conduite interne de 19mm., le talon aminci de la pièce de jonction forgée 6b correspondante sera avantageusement réduite à 3mm pour annihiler les phénomènes indésirables décrits précédemment.

Sur la figure 4c on a représenté un joint rapporté 7a, de préférence un joint métallique, ou plutôt un jonc métallique discontinu ou poreux, qui joue alors un simple rôle de centreur. Ce joint ne devra pas être étanche de manière à laisser passer le fluide depuis l'intérieur de la conduite interne vers la chambre 12a.

La deuxième cavité annulaire 12 présente une forme oblongue, le rayon de courbure du fond 12₁ circulaire étant de préférence identique au rayon de courbure 11₁ de la première cavité annulaire 11 au niveau de la zone de raccordement avec l'enveloppe externe 3 et la conduite interne 2 du PiP. Cette deuxième cavité annulaire 12 ne doit pas être étanche vis-à-vis de l'intérieur de la conduite interne, mais elle doit être en communication avec cette dernière, car lors du test final ou lors du démarrage de la production, le fluide migre vers cette deuxième cavité 12, l'étanchéité de la conduite étant assurée par le cordon de soudure externe 10, et ledit fluide s'y trouve piégé pendant toute la durée de vie des installations, sans quasiment être renouvelé.

Le diamètre externe de ladite première paroi externe 71₁ est en général de 150mm à 750mm, voire plus, le diamètre interne de ladite paroi interne 71₂ de ladite pièce de jonction étant de 50mm à 700mm.

A titre d'exemple, le PiP conventionnel de l'exemple précédent constitué d'une conduite interne de 288.85mm de diamètre intérieur, et de 17.5mm d'épaisseur, et d'une conduite externe de 369.85mm de diamètre intérieur, et de 17.5mm d'épaisseur présente une inertie de la section transversale par rapport à son centre, de 598 444 402 mm⁴.

Pour assurer une inertie équivalente au niveau de l'assemblage entre deux longueurs unitaires, il faut :
- selon l'art antérieur du brevet GB 2,161,565, une pièce de jonction forgée sans manchon additionnel rapporté, présentant une épaisseur de paroi au niveau de la soudure de raccordement entre deux longueurs unitaires de PiP de 42 mm,
- et selon l'invention, une pièce forgée, sans manchon additionnel, présentant une épaisseur de paroi au niveau de la soudure de raccordement entre deux longueurs unitaires de PiP de 28.5 mm, c'est-à-dire une épaisseur desdites deuxièmes branches externes de 28.5 mm.

Ainsi, l'épaisseur de la pièce de jonction forgée selon l'invention, au niveau de la deuxième branche externe, reste raisonnable et est sensiblement supérieure à l'épaisseur de la conduite externe, sans nécessiter de rapporter un manchon additionnel, ce dernier ne garantissant pas une fiabilité dans le temps.

Dans le cas de soudage de fortes épaisseurs d'acier, c'est-à-dire au-delà de 25-30mm, il est nécessaire d'appliquer des procédures de soudage très délicates, donc difficiles à réaliser dans des temps réduits.

Et, dans les cas extrêmes d'épaisseurs de 40 à 50mm et plus, on peut être contraint d'effectuer des chanfreins en X, qui nécessitent alors une phase de soudage par l'extérieur et une autre phase de soudage par l'intérieur, ce qui complique considérablement l'installation des conduites à bord des navires de pose et augmente de manière significative les temps opérationnels, ainsi que les risques de rupture des soudures dans le temps, en raison de leur complexité d'exécution sur chantier.

Dans l'exemple précédent du PiP composite selon l'invention, constitué d'une conduite interne de 288.85mm de diamètre intérieur en acier inox mince de 2mm d'épaisseur, complété par un renfort en fibres de carbone de 12.5mm d'épaisseur, et d'une conduite externe de 347.85mm de diamètre intérieur, et de 17.5mm d'épaisseur présente une inertie de la section transversale par rapport à son centre, de 401 254 049 mm⁴.

Pour assurer une inertie équivalente au niveau de l'assemblage entre deux longueurs unitaires, il faut :
- selon l'art antérieur du brevet GB 2,161,565, une pièce de jonction forgée sans manchon additionnel rapporté, présentant une épaisseur de paroi au niveau de la soudure de raccordement entre deux longueurs unitaires de PiP de 31 mm,
- et selon l'invention, une pièce forgée, sans manchon additionnel, présentant une épaisseur de paroi au niveau de la soudure de raccordement entre deux longueurs unitaires de PiP de 18.6 mm, c'est-à-dire une épaisseur desdites deuxièmes branches externes de 18.6 mm.

Le mode d'assemblage utilisant les pièces de jonction forgées selon l'invention constitue ainsi un mode privilégié pour la réalisation de liaisons fond-surface devant résister en fatigue sur des périodes de 20 à 30 ans voire plus, en raison de l'absence de manchon externe rapporté et de l'épaisseur raisonnable de la deuxième branche externe, ce qui autorise la mise en oeuvre de procédures de soudure classiques et parfaitement maîtrisées.

Ainsi, l'association des pièces forgées selon l'invention à un PiP composite selon l'invention permet de réduire de manière radicale l'épaisseur requise au niveau des pièces forgées assurant la jonction entre deux rames, ce qui facilite considérablement les phases de soudage lors de l'installation, augmente la fiabilité du produit posé et réduit les temps de soudure donc augmente les cadences de pose, ce qui engendre des gains financiers très significatifs.

## Revendications

1. Elément unitaire de conduite sous-marine constituée d'un ensemble de deux éléments de conduites coaxiales du type PiP (1) comprenant un élément de conduite interne (2) et un élément de conduite externe (3) coaxial avec un espace annulaire (4₁) entre les deux, de préférence comprenant un matériau d'isolation thermique (4₂) dans ledit espace annulaire et comportant à chaque extrémité une pièce de jonction (6,6a-6b) forgée en acier destinée au raccordement de deux dits éléments unitaires de conduites coaxiales (1), lesdites pièces de jonction (6) étant soudées à la fois aux extrémité desdites conduites internes et aux extrémités desdites conduites externes, **caractérisé en ce que** le dit élément de conduite interne (2) comprend dans sa partie courante un tube interne (2₁) en métal présentant une épaisseur réduite par rapport à l'épaisseur des extrémités de la dite conduite interne soudées aux dites pièces de jonction (6), l'épaisseur du dit tube interne étant inférieure à 50 % de celle desdites extrémités de ladite conduite interne, ledit tube interne (2₁) étant recouvert d'un matériau (2₂) comprenant des fibres continues longitudinales enroulées autour dudit tube interne de manière à recouvrir entièrement la surface du dit tube interne .

2. Elément unitaire selon la revendication 1, **caractérisé en ce que** lesdites fibres sont enroulées sensiblement circulairement ou hélicoïdalement selon un angle par rapport à l'axe longitudinal XX' dudit tube en position rectiligne d'au moins 75°, de préférence supérieur à 87°.

3. Elément unitaire selon l'une des revendications 1 à 2, **caractérisé en ce que** lesdites fibres sont enroulées autour dudit tube interne sur plusieurs couches de préférence d'au moins 5 couches superposées, les différentes couches pouvant comprendre une inclinaison des dites fibres symétrique par rapport à la perpendiculaire audit axe longitudinal XX'.

4. Elément unitaire selon l'une des revendications 1 à 3, **caractérisé en ce que** lesdites fibres sont enrobées dans un liant polymère organique, thermoplastique ou de préférence réticulable, de préférence encore du type époxy ou polyuréthane.

5. Elément unitaire selon la revendication 4, **caractérisé en ce que** le dit matériau composite (2₂) se présente de préférence sous forme de bande ou filament comprenant les dites fibres enrobées dans un dit liant et ledit filament ou ladite bande étant enroulé(e) sensiblement hélicoïdalement autour dudit tube interne, de préférence selon un angle par rapport à l'axe longitudinal XX' dudit tube en position rectiligne d'au moins 75°, de préférence supérieur à 87°.

6. Elément unitaire selon la revendication 5, **caractérisé en ce que** ledit tube interne présente une épaisseur de 1 à 10 mm, de préférence de 2 à 5 mm, pour un diamètre interne de 100 à 500 mm, et ledit matériau composite est déposé sur une épaisseur de 5 à 50 mm, ledit matériau composite comprenant de préférence les proportions pondérales de 50 à 70 % de fibres et 50 à 30 % de liant.

7. Elément unitaire selon l'une des revendications 1 à 6, **caractérisé en ce que** lesdites fibres sont des fibres de matériau minéral, organique ou métallique choisi de préférence parmi le carbone, kevlar, verre et titane.

8. Elément unitaire selon l'une des revendications 1 à 7, **caractérisé en ce que** ladite conduite interne comporte à chaque extrémité dudit tube interne une pièce forgée de type virole (2₃) intercalée entre ledit tube interne et ladite pièce de jonction (6) comportant une paroi tubulaire de même diamètre interne que celui dudit tube interne à l'extrémité duquel elle est soudée, l'épaisseur de la paroi tubulaire desdites pièces forgées de type virole (2₃) augmentant depuis leur extrémité soudée audit tube interne jusque vers leur extrémité soudée à ladite pièce de jonction (6), définissant ainsi un profilé s'inscrivant sensiblement dans une enveloppe conique et dont la surface externe (2₄) de préférence rugueuse, de préférence encore crantée ou filetée, est également recouverte d'un enroulement de dites fibres.

9. Elément unitaire selon l'une des revendications 1 à 8, **caractérisé en ce que** le dit tube interne est réalisé en acier inoxydable apte à résister à la corrosion du fluide véhiculé dans ladite conduite.

10. Elément unitaire selon l'une des revendications 1 à 8, **caractérisé en ce que** ladite pièce de jonction (6) est délimitée comme suit :
- dans une direction radiale par rapport à un axe longitudinal XX' de révolution de ladite pièce, elle est délimitée par une paroi interne cylindrique (7₂) sensiblement de même diamètre que celui interne de la partie courante de ladite conduite interne (2), et par une paroi externe (7₁) cylindrique de diamètre sensiblement égal au diamètre externe de la partie courante de ladite conduite externe (3), et
- dans la direction axiale longitudinale XX',
- du côté de ladite pièce de jonction destinée à être assemblée par soudage (10) à l'extrémité desdites conduites externe et interne d'un dit élément d'un ensemble d'au moins deux conduites coaxiales, lesdites parois externe (7₁) et interne (7₂) de ladite pièce de jonction forment en section longitudinale des premières branches respectivement externe (8₁) et interne (8₂) sensiblement de même épaisseur que lesdites conduites externe (3) et interne (2) auxquelles elles sont destinées à être assemblées, lesdites premières branches externe (8¹) et interne (8₂) délimitant une première cavité annulaire (11), et
- du côté opposé de ladite pièce de jonction destiné à être assemblé à une autre dite pièce de jonction, elle-même assemblée par soudage (10) à l'extrémité d'un autre élément d'ensemble de deux conduites coaxiales, lesdites parois externe (7₁) et interne (7₂) forment en section longitudinale des deuxièmes branches respectivement externe (9₁) et interne (9₂), délimitant une deuxième cavité annulaire (12),
- les fonds (11₁, 12₁) desdites première et deuxième cavités (11, 12) étant espacés dans ladite direction longitudinale XX', de manière à délimiter une zone pleine (13) de ladite pièce de jonction dans laquelle lesdites parois externe (7₁) et interne (7₂) forment les faces externe et interne d' une même paroi cylindrique.

11. Elément unitaire selon la revendication 10, **caractérisé en ce que** :
- l'extrémité libre de ladite deuxième branche externe (9₁) présente une forme,de préférence un chanfrein (14), la rendant apte à être soudée à l'extrémité libre d'une autre dite deuxième branche externe d'une autre pièce de jonction à laquelle elle est destinée à être assemblée, ladite autre pièce de jonction étant, elle-même, assemblée à l'extrémité d'un deuxième dit élément d'ensemble de deux conduites coaxiales, et
- l'extrémité libre de ladite deuxième branche interne (9₂) présente une forme la destinant à buter en contact sans lui être soudée avec l'extrémité libre d'une autre dite deuxième branche interne d'une autre dite pièce de jonction assemblée à l'extrémité d'un dit deuxième élément d'ensemble de conduites coaxiales,et
- de préférence les deux dites deuxièmes branches externes des deux dites pièces de jonction destinées à être assemblées par soudure étant de même épaisseur, supérieure à l'épaisseur de ladite deuxième branche interne de ladite pièce de jonction.

12. Elément unitaire selon l'une des revendications 10 à 11, **caractérisé en ce que** lesdites première et deuxième cavités annulaires (11,12) présentent une forme oblongue en section longitudinale, les fonds (11₁) et (12₁) présentant une forme incurvée dont les rayons de courbure sont, de préférence, identiques.

13. Procédé d'assemblage de deux éléments selon l'une des revendications 1 à 12, **caractérisé en ce que** l'on assemble un dit premier élément de conduites coaxiales comportant une première pièce de jonction (6a) à l'extrémité aval, et un deuxième dit élément de conduites coaxiales comportant une deuxième dite pièce de jonction 6b, à l'extrémité amont, en réalisant les étapes dans lesquelles on rapproche les unes des autres et on soude entre elles les extrémités libres desdites première et deuxième pièces de jonction 6a-6b des deux dits éléments de conduites coaxiales à assembler.

14. Conduite sous-marine de liaison fond-surface constituée par assemblage de différents éléments unitaires selon l'une des revendications 1 à 12, conformément au procédé de la revendication 13.

## Claims

1. A unitary submarine pipe element, composed of an assembly of two coaxial pipe elements of the PiP type (1) with an inner pipe element (2) and a coaxial outer pipe element (3), with an annular space (4₁) between the pipes, preferably containing a thermally insulating material (4₂) in the said annular space, and that include, at each end, a junction piece (6, 6a-6b) in the form of a steel forging for connecting together two of the said unit elements of axial pipe (1), with the said junction pieces (6) being welded to the ends of the said inner pipes and to the ends of the said outer pipes, with the said unit elements being **characterised in that** the said inner pipe element (2) includes, in its running portion, a metal inner tube (2₁) with a thickness that is small in relation to the thickness of the ends of the said inner pipes that are welded to the said junction pieces (6), with the thickness of the said inner tube being less than 50% of the thickness of the said ends of the said inner pipe, and with the said inner tube (2₁) being covered in a material (2₂) that includes continuous longitudinal fibres wound around the said inner tube so as to entirely cover the surface of the said inner tube.

2. A unitary element according to claim 1, **characterised in that** the said fibres are wound in a more or less circular or helical manner at an angle in relation to the longitudinal axis (XX') of the said tube in a rectilinear position, of at least 75°, and preferably greater than 87°.

3. A unitary element according to claim 1 to 2, **characterised in that** the said fibres are wound around the said inner tube in several layers, preferably at least five superimposed layers, with the various layers possibly including symmetrical inclination of the said fibres in relation to the perpendicular to the said longitudinal axis (XX') .

4. A unit element according to any one of claims 1 to 3, **characterised in that** the said fibres are coated in a thermoplastic or preferably a curable organic polymer binder, more preferably of the epoxy or polyurethane type.

5. A unit element according to claim 4, **characterised in that** the said composite material (2₂) is preferably in the form of a strip or filament that includes the said fibres coated in a said binder, and where the said filament or the said strip are wound more or less helically about the said inner tube, preferably at an angle in relation to the longitudinal axis (XX') of the said tube, in a rectilinear position, that is not less than 75°, and is preferably greater than 87°.

6. A unit element according to claim 5, **characterised in that** the said inner tube has a thickness of 1 to 10 mm, preferably 2 to 5 mm, for an inside diameter of between 100 and 500 mm, and the said composite material is deposited with a thickness of 5 to 50 mm, with the said composite material preferably including proportions by weight of 50% to 70% fibres and 50% to 30% binder.

7. A unitary element according to any one of claims 1 to 6, **characterised in that** the said fibres are of mineral, organic, or metallic material, preferably selected from carbon, kevlar, glass, and titanium.

8. A unitary element according to any one of claims 1 to 7, **characterised in that**, at each end of the said inner tube, the said inner pipe includes a ferrule type forging (2₃) interposed between the said inner tube and the said junction piece (6), which has a tubular wall with the same inside diameter as the said inner tube to the end of which it is welded, where the thickness of the tubular walls of the said ferrule type forged parts (2₃) increases from their ends welded to the said inner tube to their ends welded to the said junction pieces (6), thus forming shapes that are more or less inscribed within conical envelopes, with their outside surfaces (2₄) preferably being rough, and more preferably being stepped or threaded, and likewise covered by a winding of the said fibres.

9. A unit element according to any one of claims 1 to 8, **characterised in that** the said inner tube is made of stainless steel that is suitable to resist corrosion by the fluid conveyed in the said pipe.

10. A unitary element according to any one of claims 1 to 8, **characterised in that** the said junction piece (6) is formed as follows:
- in a radial direction in relation to a longitudinal axis (XX') of symmetry of the said forging, it is bounded by a cylindrical inner wall (7₂) of more or less the same diameter as the internal wall of the running portion of the said inner pipe (2), and by a cylindrical outer wall (7₁) with a diameter that is more or less equal to the outside diameter of the running portion of the said outer pipe (3), and
- in the longitudinal axial direction (XX'):
- at the side of the said junction piece that is to be welded (10) to the ends of the said outer and inner pipes of a said assembly element of at least two coaxial pipes, with the said outer and inner walls (7₁, 7₂) of the said junction piece forming, in longitudinal section, respective first outer and inner branches (8₁, 8₂) of more or less the same thickness as the said outer and inner pipes (3, 2) to which they are to be assembled, where the said first outer and inner branches (8₁, 8₂) form a first annular cavity (11), and
- at its opposite side where the said junction piece is to be assembled to another such junction piece, itself welded (10) to the end of another assembly element of two coaxial pipes, the said outer and inner walls (7₁, 7₂) form, in longitudinal section, respective second outer and inner branches (9₁, 9₂) forming a second annular cavity (12);
- the ends (11₁, 12₁) of the said first and second cavities (11, 12) being spaced apart in the said longitudinal direction (XX') in such a manner as to form a solid zone (13) of the said junction piece in which the said outer and inner walls (7₁, 7₂) form the outer and inner faces of a common cylindrical wall.

11. A unitary element according to claim 10, **characterised in that**:
- the free end of the said second outer branch (9₁) has a shape, preferably a chamfer (14), making it suitable to be welded to the free end of another said second outer branch of another junction piece to which it is to be assembled, with the said other junction piece itself being assembled to the end of a second said assembly element of two coaxial pipes, and
- the free end of the said second inner branch (9₂) has a shape enabling it to come into contact with, but not welded to, the free end of another said second inner branch of another said junction piece assembled to the end of a said second element of a coaxial pipe assembly, and
- both of the said second outer branches of the said two junction pieces preferably being assembled together by welding, being of the same thickness which is greater than the thickness of the said second inner branch of the said junction piece.

12. A unitary element according to claim 10 to 11, **characterised in that** the said first and second annular cavities (11, 12) are oblong in shape in longitudinal section, with end walls (11₁, 12₁) that have curved shapes with radii of curvature that are preferably identical.

13. A method for the assembly of two elements according to any one of claims 1 to 12, **characterised in that** a first said coaxial pipe element that includes a first junction piece (6a) at its downstream end is assembled to a second said coaxial pipe element that has a second said junction piece (6b) at its upstream end, by performing steps in which the free ends of the said first and second junction pieces (6a-6b) of the said two coaxial pipe elements to be assembled are brought together and welded.

14. A bottom-to-surface connection submarine pipe created by assembling together a large number of unit elements according to any one of claims 1 to 12, according to the method of claim 13.

## Patentansprüche

1. Einzelelement einer Unterwasserrohrleitung, die von einer Einheit aus zwei Elementen koaxialer Rohrleitungen des Typs PiP (1) gebildet wird, die ein inneres Rohrleitungselement (2) und ein koaxiales äußeres Rohrleitungselement (3) mit einem ringförmigen Zwischenraum (4₁) zwischen den beiden umfaßt, vorzugsweise ein Wärmeisoliermaterial (4₂) in dem ringförmigen Zwischenraum und an jedem Ende ein Stahlschmiedeverbindungsteil (6, 6a-6b) umfaßt, das für die Verbindung von zwei Einzelelementen koaxialer Rohrleitungen (1) bestimmt ist, wobei die Verbindungsteile (6) sowohl an den Enden der inneren Rohrleitungen als auch an den Enden der äußeren Rohrleitungen angeschweißt sind, **dadurch gekennzeichnet, daß** das innere Rohrleitungselement (2) in seinem durchgehenden Teil ein Innenrohr (2₁) aus Metall aufweist, dessen Dicke gegenüber der Dicke der an den Verbindungsteilen (6) angeschweißten Enden der inneren Rohrleitung reduziert ist, wobei die Dicke des Innenrohrs kleiner als 50 % der Dicke der Enden der inneren Rohrleitung ist, wobei das Innenrohr (2₁) mit einem Material (2₂) überzogen ist, das Endloslängsfasern aufweist, die derart um das Innenrohr gewickelt sind, daß sie die Oberfläche des Innenrohrs vollständig bedecken.

2. Einzelelement nach Anspruch 1, **dadurch gekennzeichnet, daß** die Fasern im wesentlichen kreisförmig oder spiralförmig in einem Winkel gegenüber der Längsachse XX' des Rohrs in geradliniger Position von wenigstens 75°, vorzugsweise größer 87° gewickelt sind.

3. Einzelelement nach einem der Ansprüche 1 bis 2, **dadurch gekennzeichnet, daß** die Fasern über mehrere Lagen, vorzugsweise wenigstens fünf übereinander angeordnete Lagen um das Innenrohr gewickelt sind, wobei die verschiedenen Lagen eine Neigung der Fasern aufweisen können, die bezogen auf die Senkrechte zur Längsachse XX' symmetrisch ist.

4. Einzelelement nach einem der Ansprüche 1 bis 3, **dadurch gekennzeichnet, daß** die Fasern in ein organisches, thermoplastisches oder vorzugsweise vernetzbares Polymerbindemittel, weiterhin vorzugsweise vom Typ Epoxidharz oder Polyurethan eingebettet sind.

5. Einzelelement nach Anspruch 4, **dadurch gekennzeichnet, daß** das Verbundmaterial (2₂) vorzugsweise in Form eines Streifens oder eines Filaments vorliegt, der bzw. das die in ein Bindemittel eingebetteten Fasern umfaßt, und wobei das Filament oder der Streifen im wesentlichen spiralförmig um das Innenrohr gewickelt ist, vorzugsweise in einem Winkel gegenüber der Längsachse XX' des Rohrs in geradliniger Position von wenigstens 75°, vorzugsweise größer 87°.

6. Einzelelement nach Anspruch 5, **dadurch gekennzeichnet, daß** das Innenrohr eine Dicke zwischen 1 und 10 mm, vorzugsweise zwischen 2 und 5 mm, bei einem Innendurchmesser von 100 bis 500 mm aufweist, und das Verbundmaterial über eine Dicke von 5 bis 50 mm aufgebracht ist, wobei das Verbundmaterial vorzugsweise die Gewichtsverhältnisse von 50 bis 70 % Fasern und 50 bis 30 % Bindemittel aufweist.

7. Einzelelement nach einem der Ansprüche 1 bis 6, **dadurch gekennzeichnet, daß** die Fasern Fasern aus mineralischem, organischem oder metallischem Material sind, welches vorzugsweise aus Kohlenstoff, Kevlar, Glas und Titan ausgewählt ist.

8. Einzelelement nach einem der Ansprüche 1 bis 7, **dadurch gekennzeichnet, daß** die Innenrohrleitung an jedem Ende des Innenrohrs ein zwischen dem Innenrohr und dem Verbindungsteil (6) angeordnetes ringartiges Schmiedeteil (2₃) aufweist, das eine rohrförmige Wand mit gleichem Innendurchmesser wie das Innenrohr aufweist, an dessen Ende es angeschweißt ist, wobei die Dicke der rohrförmigen Wand der ringartigen Schmiedeteile (2₃) von ihrem an dem Innenrohr angeschweißten Ende bis zu ihrem an dem Verbindungsteil (6) angeschweißten Ende zunimmt, wodurch ein Profil definiert wird, das im wesentlichen einer konischen Umhüllenden einbeschrieben ist und dessen vorzugsweise rauhe, weiterhin vorzugsweise mit Rasten oder Gewinde versehene Außenseite (2₄) ebenfalls mit einer Faserwicklung überzogen ist.

9. Einzelelement nach einem der Ansprüche 1 bis 8, **dadurch gekennzeichnet, daß** das Innenrohr aus rostfreiem Stahl gefertigt ist, der geeignet ist, der Korrosion des in der Leitung strömenden Fluids standzuhalten.

10. Einzelelement nach einem der Ansprüche 1 bis 8, **dadurch gekennzeichnet, daß** das Verbindungsteil (6) wie folgt begrenzt ist:
- in einer radialen Richtung gegenüber einer Rotationslängsachse XX' des Teils ist es begrenzt durch eine zylindrische Innenwand (7₂), deren Durchmesser im wesentlichen gleich dem Innendurchmesser des durchgehenden Teils der Innenrohrleitung (2) ist, sowie durch eine zylindrische Außenwand (7₁), deren Durchmesser im wesentlichen gleich dem Außendurchmesser des durchgehenden Teils der Außenrohrleitung (3) ist, und
- in der axialen Längsrichtung XX',
- auf der Seite des Verbindungsteils, welches dazu bestimmt ist, mit dem Ende der Außen- und der Innenrohrleitung eines Elements einer Einheit aus wenigstens zwei koaxialen Rohrleitungen verschweißt (10) zu werden, bilden die Außenwand (7₁) und die Innenwand (7₂) des Verbindungsteils im Längsschnitt einen ersten Außenschenkel (8₁) bzw. einen ersten Innenschenkel (8₂) mit im wesentlichen gleicher Dicke wie die Außenrohrleitung (3) und die Innenrohrleitung (2), mit denen sie verbunden werden sollen, wobei der erste Außenschenkel (8₁) und der erste Innenschenkel (8₂) einen ersten ringförmigen Hohlraum (11) begrenzen, und
- auf der gegenüberliegenden Seite des Verbindungsteils, welche dazu bestimmt ist, mit einem weiteren Verbindungsteil verbunden zu werden, das selbst mit dem Ende eines weiteren Elements einer Einheit aus zwei koaxialen Rohrleitungen verschweißt ist, bilden die Außenwand (7₁) und die Innenwand (7₂) im Längsschnitt einen zweiten Außenschenkel (9₁) bzw. einen zweiten Innenschenkel (9₂), die einen zweiten ringförmigen Hohlraum (12) begrenzen,
- wobei die Böden (11₁, 12₁) des ersten und des zweiten Hohlraums (11, 12) in der Längsrichtung XX' derart voneinander beabstandet sind, daß ein massiver Bereich (13) des Verbindungsteils begrenzt wird, in dem die Außenwand (7₁) und die Innenwand (7₂) die Außen- und die Innenseite einer gleichen zylindrischen Wand bilden.

11. Einzelelement nach Anspruch 10, **dadurch gekennzeichnet, daß**:
- das freie Ende des zweiten Außenschenkels (9₁) eine Form, vorzugsweise eine Fase (14) aufweist, die es geeignet macht, an dem freien Ende eines weiteren zweiten Außenschenkels eines anderen Verbindungsteils, mit dem es verbunden werden soll, angeschweißt zu werden, wobei das andere Verbindungsteil selbst mit dem Ende eines zweiten Elements einer Einheit aus zwei koaxialen Rohrleitungen verbunden ist, und
- das freie Ende des zweiten Innenschenkels (9₂) eine Form aufweist, die es dazu bestimmt, mit dem freien Ende eines weiteren zweiten Innenschenkels eines weiteren Verbindungsteils, das mit dem Ende eines zweiten Elements einer Einheit aus koaxialen Rohrleitungen verbunden ist, in Kontakt zu stoßen, ohne mit ihm verschweißt zu sein, und
- wobei vorzugsweise die beiden zweiten Außenschenkel der beiden Verbindungsteile, die dazu bestimmt sind, durch Schweißen verbunden zu werden, die gleiche Dicke aufweisen, welche größer als die Dicke des zweiten Innenschenkels des Verbindungsteils ist.

12. Einzelelement nach einem der Ansprüche 10 bis 11, **dadurch gekennzeichnet, daß** der erste und der zweite ringförmige Hohlraum (11, 12) im Längsschnitt eine längliche Form aufweisen, wobei die Böden (11₁) und (12₁) eine gebogene Form aufweisen, deren Krümmungsradien vorzugsweise identisch sind.

13. Verfahren zum Verbinden von zwei Elementen nach einem der Ansprüche 1 bis 12, **dadurch gekennzeichnet, daß** ein erstes Element koaxialer Rohrleitungen, das ein erstes Verbindungsteil (6a) am stromabwärtigen Ende aufweist, und ein zweites Element koaxialer Rohrleitungen, das ein zweites Verbindungsteil (6b) am stromaufwärtigen Ende aufweist, **dadurch** verbunden werden, daß die Schritte durchgeführt werden, bei denen die freien Enden des ersten und des zweiten Verbindungsteils (6a-6b) der beiden zu verbindenden Elemente koaxialer Rohrleitungen einander genähert und miteinander verschweißt werden.

14. Unterwasserrohrleitung zur Verbindung von Grund und Oberfläche, die durch Verbinden mehrerer Einzelelemente nach einem der Ansprüche 1 bis 12, gemäß dem Verfahren des Anspruchs 13 gebildet wird.
